# DEMANDE DE BREVET EUROPEEN

(11) **EP 2 068 186 A1**
(43) Date de publication de la demande: **10.06.2009**
(21) Numéro de dépôt: 08168034.0
(22) Date de dépôt: 31.10.2008
(51) Int. Cl.: G02B 6/44

(54) **Prise optique pour réseau de télécommunication**

(30) Priorité: 14.11.2007 FR 0759024
(71) Demandeur: Nexans, 75008 Paris (FR)
(72) Inventeur: La désignation de l'inventeur n'a pas encore été déposée
(74) Mandataire: Lenne, Laurence

(57) **Abrégé**

L'invention concerne une prise optique pour réseau de télécommunication comportant un boîtier constitué d'un socle (1) comportant un agencement de levage (1A) d'une surlongueur de fibre optique nue et d'un couvercle (2), ce socle comportant une ouverture (1A) pour l'atteinte d'un câble de données (CD), ladite prise comportant un raccord (4) pour la connexion de ladite fibre optique gainée avec une fibre optique externe au moyen d'une fiche de connexion et comportant également une embase intermédiaire (3) disposée entre ledit socle (1) et ledit couvercle (2).

Selon l'invention, ledit raccord (4) est porté par cette embase et ledit socle (1) comporte au moins un support d'épissures (1G) de la fibre nue.

## Description

L'invention concerne une prise optique pour réseau de télécommunication, en général murale, de type FTTH (en anglais « Fiber To The Home »). Ce type de prise est installé dans les habitations, afin de permettre le raccordement d'une fibre optique de connexion de matériels de télécommunication ou équivalent.

Une telle prise comporte classiquement un boîtier constitué d'un socle et d'un couvercle. Le socle supporte un enroulement d'une sur longueur de fibre optiques gainée ou nue, dont une extrémité provient d'un câble de transfert de données débouchant d'une gaine technique incluse dans le mur et dont l'autre extrémité est connectée à un raccord solidaire du socle et sur lequel peut être connectée par l'extérieur de la prise, la fiche de la fibre optique du matériel de l'habitant ou utilisateur.

Le document de brevet WO 92/22842 décrit une prise optique pour réseau de télécommunication comportant un boîtier constitué d'un socle comportant un agencement de lovage d'une surlongueur de fibre optique gainée et d'un couvercle, ce socle comportant une ouverture pour l'atteinte d'un câble de données, la prise comportant un raccord pour la connexion de la fibre optique nue avec une fibre optique externe au moyen d'une fiche de connexion et comportant également une embase intermédiaire disposée entre le socle et le couvercle.

Selon ce document, la fibre optique gainée dégagée du câble de donnée est stockée dans le socle, puis, dégainée et donc nue, elle est retubée dans un tube à faible friction et stockée dans l'embase intermédiaire dite organiseur pour être ensuite connectée au raccord porté par le couvercle.

Ce type d'agencement ne convient pas pour le montage actuel des fibres optiques.

En effet, de nos jours, en général, un premier tronçon de fibre de longueur standardisée est dégagé du câble de données et est disposé en sortie de ce câble de données. Sur ce premier tronçon, il faut fixer par une épissure un second tronçon de fibre qui a une longueur adaptée aux besoins du client et qui est connectée au raccord. Afin de pouvoir réaliser cette épissure, le premier tronçon doit être dégainé et il l'est donc dès une petite distance de son dégagement du câble de données, est stocké dans le socle puis son extrémité est épissurée avec l'extrémité dégainée du second tronçon qui lui est gainé sur l'essentiel de sa longueur, jusqu'à sa connexion avec le raccord.

La fibre optique dans son ensemble dégagée du câble de données est donc dénudée ou dégainée et enroulée dans le socle et une partie de longueur variable est laissée gainée, afin d'assurer la connexion de son extrémité à ce raccord au moyen d'une fiche. Il en découle que, dans le socle, se trouve présent essentiellement un tronçon de fibre optique nue.

En cas d'intervention sur les parties présentes dans le socle, par exemple sur le raccord ou sur des épissures de fibres, il peut facilement en résulter une dégradation de la fibre optique nue, dont la fragilité est très supérieure à celle de la fibre optique gainée.

L'invention propose une solution à ce problème, en fournissant une gestion interne de la fibre optique nue et de la fibre optique gainée au sein de la prise.

Pour ce faire, l'invention propose une prise optique pour réseau de télécommunication comportant un boîtier constitué d'un socle comportant un agencement de lovage d'une surlongueur de fibre optique nue et d'un couvercle, ce socle comportant une ouverture pour l'atteinte d'un câble de données, ladite prise comportant un raccord pour la connexion de ladite fibre optique gainée avec une fibre optique externe au moyen d'une fiche de connexion et comportant également une embase intermédiaire disposée entre ledit socle et ledit couvercle, caractérisée en ce que ledit raccord est porté par cette embase et en ce que ledit socle comporte au moins un support d'épissure de la fibre nue.

Selon un mode de réalisation préféré, ledit socle comporte au moins une ouverture latérale et horizontale d'entrée dudit câble de données.

Selon un mode de réalisation préféré, ledit socle comporte au moins une ouverture inférieure et verticale d'entrée dudit câble de données.

Avantageusement, lesdites ouvertures d'entrée sont disposées dans la paroi périphérique du dit socle et sont fermées par un opercule sécable.

Ledit socle peut comporter deux ouvertures latérales et horizontales d'entrée dudit câble de données, symétriques par rapport à son plan longitudinal, et deux ouvertures inférieures et verticales d'entrée dudit câble de données, symétriques par rapport à son plan longitudinal.

De préférence, ledit socle comporte au moins une rampe de guidage de ladite fibre vers ladite embase.

Avantageusement, ledit socle comporte deux dites rampes symétriques par rapport à son plan longitudinal.

La prise peut être mixte et comporter également un raccord RJ45.

L'invention est décrite ci-après plus en détail à l'aide de figures ne représentant qu'un mode de réalisation préféré de l'invention.

La figure 1 est une vue en perspective éclatée d'une prise, selon une première variante de réalisation de l'invention.

Les figures 2 et 3 sont des vues partielles en perspective et en vue de dessus d'une prise, selon une seconde variante de réalisation de l'invention.

Les figures 4 et 5 sont des vues en perspective de détail, de la figure 2.

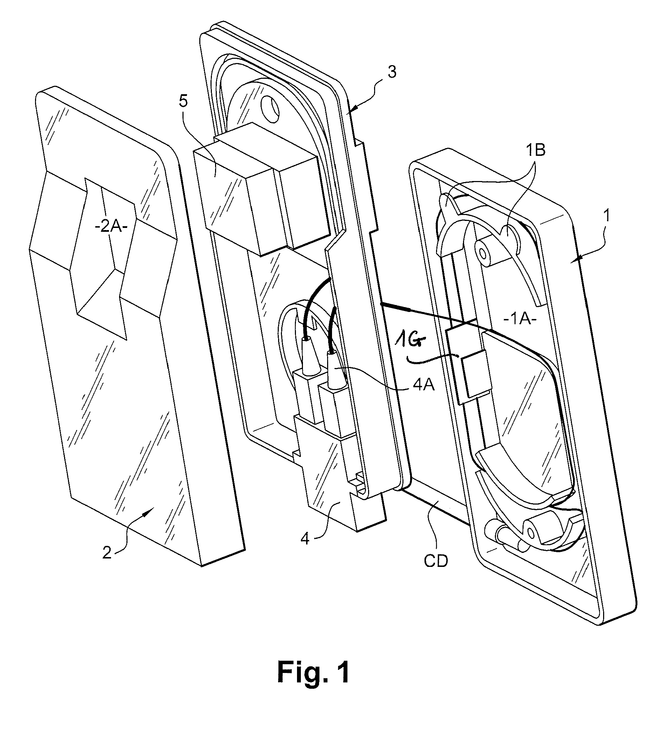

Comme illustrée sur la figure 1, une prise optique pour réseau de télécommunication conforme à l'invention comporte un boîtier constitué d'un socle 1 et d'un couvercle 2, ce socle comportant une ouverture 1A pour l'atteinte d'un câble de données CD par l'arrière du socle, par exemple à partir d'une gaine technique noyée dans un mur. Le socle 1 comporte au moins un support d'épissure 1G de fibre optique nue.

La prise comporte également une embase intermédiaire 3 disposée entre le socle 1 et le couvercle 2, un raccord 4 pour la connexion d'une fibre optique de ce câble de données CD avec une fibre optique externe du matériel de l'habitant ou utilisateur, au moyen d'une fiche de connexion, étant porté par cette embase 3.

Une fois montés, le socle 1 est solidarisé à un mur, par exemple, et l'embase 3 est fixée par encliquetage et vissage sur le socle, le couvercle 1 venant coiffer l'embase.

La fibre optique dégagée du câble de données CD au niveau d'une ouverture d'accès ici latérale est dénudée et enroulée sur un agencement de lovage 1B agencé sur le fond du socle.

Un tronçon suivant est laissé gainé et est introduit dans l'embase 3 où il peut être également enroulé au moyen d'un agencement de lovage porté par le fond de l'embase, une fiche 4A étant montée à l'extrémité libre de ce tronçon gainé pour la liaison au raccord 4.

Sur la figure 1, à titre d'exemple, deux fibres sont montées dans la prise et sur le raccord 4.

Le tronçon de fibre optique nue est donc géré dans le socle 1 et le tronçon de fibre optique gainée dans l'embase 3. Lors d'une intervention sur ce tronçon de fibre gainée ou sur la raccord 4, le tronçon de fibre nue est protégé de tout dommage, logé derrière l'embase 3 dans le socle 1.

La prise représentée est mixte et comporte également un raccord RJ45 5 qui est accessible au travers d'une fenêtre 2A agencée sur le couvercle 2.

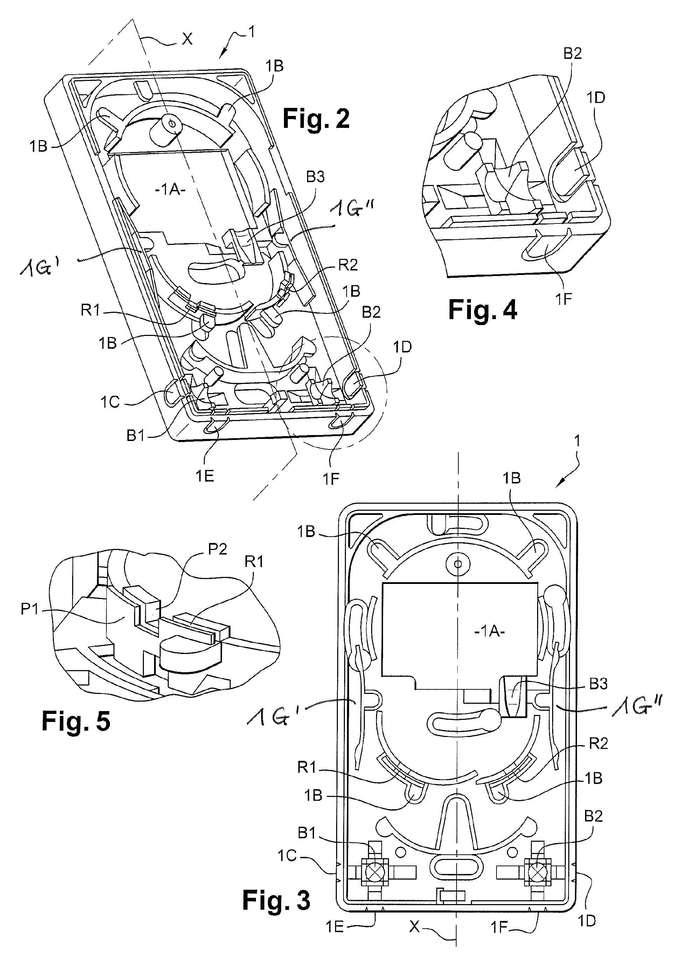

Sur les figures 2 à 5 est représenté un socle 1 particulièrement adapté à une telle prise.

En plus de l'ouverture d'entrée 1A du câble de données par l'arrière, déjà évoquée, le socle 1 comporte deux ouvertures latérales et horizontales 1C, 1D d'entrée du câble de données, symétriques par rapport à son plan longitudinal X, et deux ouvertures inférieures et verticales 1 E, 1 F d'entrée du câble de données, symétriques par rapport à son plan longitudinal X. Ces ouvertures d'entrée sont disposées dans la paroi périphérique du socle 1 et sont fermées par un opercule sécable, comme bien visible sur la figure 4.

En face des paires d'ouvertures 1 B et 1E, 1D et 1F, ainsi formées à chaque coin inférieur de la prise, est disposé un berceau B1, B2 de maintien du câble de données entrant, commun à chaque paire.

Au bord de l'ouverture d'entrée par l'arrière 1A, est également agencé un berceau B3 de maintien du câble de données.

Ce socle 1 comporte deux supports d'épissure 1G' et 1G" disposés symétriquement et permettant l'épissurage selon le point d'entrée, à savoir une des ouvertures d'entrée 1C, 1D, 1E, 1F du câble de données.

Ce socle peut donc s'adapter à tout type de position relative du câble de données et de la prise, au sein du bâtiment, assurant tout autant une possible entrée par l'arrière, une possible entrée latérale ou une possible entrée inférieure de ce câble dans la prise.

Le socle comporte également au moins une rampe de guidage de la fibre optique vers l'embase intermédiaire 3. Plus précisément, il comporte deux rampes R1, R2 symétriques par rapport à son plan longitudinal X.

Ces rampes, dont l'une R1 est particulièrement visible sur le figure 5, forme une fente d'insertion comprise entre deux paroi P1, P2 perpendiculaire au fond du socle et dans laquelle est insérée la fibre optique selon un rayon de courbure admissible. La fibre peut donc ainsi être maintenue en place et dirigée progressivement vers l'avant du socle 1 vers l'embase intermédiaire 3.

Selon l'ouverture d'entrée du câble de données utilisée, la fibre optique est enroulée dans un sens ou dans l'autre sens de l'agencement de lovage 1B, et en conséquence, l'une ou l'autre des rampes R1, R2 est utilisée.

## Revendications

1. Prise optique pour réseau de télécommunication comportant un boîtier constitué d'un socle (1) comportant un agencement de lovage (1A) d'une surlongueur de fibre optique nue et d'un couvercle (2), ce socle comportant une ouverture (1A) pour l'atteinte d'un câble de données (CD), ladite prise comportant un raccord (4) pour la connexion de ladite fibre optique gainée avec une fibre optique externe au moyen d'une fiche de connexion et comportant également une embase intermédiaire (3) disposée entre ledit socle (1) et ledit couvercle (2), **caractérisée en ce que** ledit raccord (4) est porté par cette embase et **en ce que** ledit socle (1) comporte au moins un support d'épissures (1G) de la fibre nue.

2. Prise selon la revendication précédente, **caractérisé en ce que** ledit socle comporte au moins une ouverture latérale et horizontale (1C, 1D) d'entrée dudit câble de données (CD).

3. Prise selon l'une des revendications précédentes, **caractérisé en ce que** ledit socle comporte au moins une ouverture inférieure et verticale (1E, 1 F) d'entrée dudit câble de données (CD).

4. Prise selon la revendication 2 ou 3, **caractérisée en ce que** lesdites ouvertures d'entrée (1C, 1D, 1E, 1F) sont disposées dans la paroi périphérique du dit socle et sont fermées par un opercule sécable.

5. Prise selon l'une des revendications 2 à 4, **caractérisé en ce que** ledit socle comporte deux ouvertures latérales et horizontales (1C, 1D) d'entrée dudit câble de données, symétriques par rapport à son plan longitudinal (X), et deux ouvertures inférieures et verticales (1E, 1F) d'entrée dudit câble de données, symétriques par rapport à son plan longitudinal (X).

6. Prise selon l'une des revendications précédentes, **caractérisée en ce que** ledit socle (1) comporte au moins une rampe de guidage (R1, R2) de ladite fibre vers ladite embase (3).

7. Prise selon la revendication précédente, **caractérisée en ce que** ledit socle comporte deux dites rampes (R1, R2) symétriques par rapport à son plan longitudinal (X).

8. Prise selon l'une des revendications précédentes, **caractérisée en ce qu'**elle est mixte et comporte également un raccord RJ45 (5).
